# EUROPÄISCHE PATENTSCHRIFT

(11) **EP 1 873 422 B1**
(45) Veröffentlichungstag und Bekanntmachung des Hinweises auf die Patenterteilung: **05.05.2010**
(21) Anmeldenummer: 07111347.6
(22) Anmeldetag: 28.06.2007
(51) Int. Cl.: F16H 59/38, F16H 59/40, F16H 59/42, F16H 59/46, F16H 61/12

(54) **Verfahren zur Überwachung einer Kraftschlussrichtung eines Fahrzeug-Getriebes nahe Fahrzeugstillstand**
Method for monitoring the frictional connection of a vehicle drive at almost standstill
Procédé destiné à la surveillance d'un sens de liaison de friction d'une boîte de vitesse de véhicule à proximité d'un véhicule à l'arrêt

(30) Priorität: 01.07.2006 DE 102006030526
(43) Veröffentlichungstag der Anmeldung: 02.01.2008
(60) Teilanmeldung: 09174336.9
(73) Patentinhaber: ZF Friedrichshafen AG, 88038 Friedrichshafen (DE)
(72) Erfinder: Gierer, Georg, 88079 Kressbronn (DE); Popp, Christian, 88079 Kressbronn (DE); Steinhauser, Klaus, 88079 Kressbronn (DE); Schmidt, Thilo, 88074 Meckenbeuren (DE)

(56) Entgegenhaltungen:
- EP-A- 1 297 991
- DE-A1- 10 137 902
- DE-A1- 10 308 218
- DE-A1- 19 733 465
- DE-A1-102004 046 558

## Beschreibung

Die Erfindung betrifft ein Verfahren zur Überwachung der Kraftschlussrichtung eines automatischen oder automatisierten Fahrzeug-Getriebes nahe Fahrzeugstillstand und eingelegter Fahrposition, gemäß dem Oberbegriff des Patentanspruchs 1. Ein entsprechendes Verfahren ist aus dem Dokument DE 10 2004 046 558 A1 bekannt.

Steigende Anforderungen an die Fahr-, Betriebs- und Bediensicherheit von modernen Kraftfahrzeugen erfordern einen zunehmend höheren Aufwand an Überwachungen von Fahrzuständen des Fahrzeugs. So gehören bei Fahrzeug-Getrieben mit automatischen oder automatisierten Gang- bzw. Übersetzungswechseln die Überwachung von Schlupf im Getriebe zum Stand der Technik. Ein außerhalb von Schaltungen bzw. Übersetzungswechseln auftretender unzulässiger Schlupf im Getriebe wird üblicherweise mittels einer einfachen Plausibilisierungsabfrage von Drehzahl- bzw. Übersetzungsverhältnissen ermittelt. Ein während eines Gang- bzw. Übersetzungswechsels auftretender unzulässiger Schlupf im Getriebe wird üblicherweise mittels Überwachung von Drehzahlverläufen oder einzuhaltenden Drehzahl- bzw. Übersetzungs-Toleranzbändern ermittelt. In beiden Fällen wird hierzu üblicherweise die Signale von Drehzahlsensoren am Getriebeeingang und am Getriebeausgang ausgewertet. Ein Automatgetriebe mit einem im Kraftfluss zwischen dem Antriebsmotor des Fahrzeugs und dem Getriebe angeordneten Drehmomentwandler als Anfahrelement beispielsweise weist üblicherweise am Getriebeeingang einen so genannten Turbinendrehzahlsensor und am Getriebeausgang einen so genannten Abtriebsdrehzahlsensor auf. Um einen Schlupf im Getriebe überhaupt bestimmen zu können, sind in jedem Fall messbare Mindestdrehzahlen erforderlich, die von dem jeweils vorhandenen Drehzahlerfassungssystem (Sensortyp, Impulsfolge bzw. Impulsabstand) abhängig sind. Das bedeutet, dass nach dem Stand der Technik das Fahrzeug in jedem Fall mit einer gewissen Mindestgeschwindigkeit rollen muss, damit für die Gang- bzw. Übersetzungsüberwachung verwertbare Messsignale vorliegen.

Der vorliegenden Erfindung liegt die Aufgabe zugrunde, ein Verfahren darzustellen, mittels dem nahe Fahrzeugstillstand überwacht wird, ob eine vom Fahrer des Fahrzeugs eingelegte bzw. vorgegebene Fahrtrichtung bzw. Kraftschlussrichtung des Getriebes mit der tatsächlichen Kraftschlussrichtung des Getriebes übereinstimmt.

Erfindungsgemäß gelöst wird diese Aufgabe durch eine Verfahren mit den Merkmalen des Patentanspruchs 1. Vorteilhafte Ausgestaltungen und Weiterbildungen der Erfindung ergeben sich aus den Unteransprüchen.

Erfindungsgemäß wird ein Verfahren zur Überwachung der Kraftschlussrichtung eines automatischen oder automatisierten Fahrzeug-Getriebes nahe Fahrzeugstillstand und eingelegter Fahrposition vorgeschlagen, bei dem bei Fahrzeugstillstand oder unmittelbar beim Anrollen des Fahrzeugs eine Soll-Kraftschlussrichtung des Getriebes aus der eingelegten Fahrposition ermittelt wird und unmittelbar beim Anrollen des Fahrzeugs aus einer sensierten Drehrichtung einer Getriebeeingangswelle und einer sensierten Drehrichtung einer Getriebeabtriebswelle eine tatsächliche Kraftschlussrichtung des Getriebes ermittelt wird, wobei auf einen Fehler geschlossen wird, wenn die Soll-Kraftschlussrichtung und die tatsächliche Kraftschlussrichtung nicht identisch sind.

In einer Ausgestaltung hierzu kann vorgesehen sein, dass aus der eingelegten Fahrposition eine Soll-Drehrichtung der Getriebeeingangswelle und eine Soll-Drehrichtung der Getriebeabtriebswelle bestimmt wird, dass unmittelbar beim Anrollen des Fahrzeugs eine tatsächliche Drehrichtung der Getriebeeingangswelle mittels eines ersten Sensors und eine tatsächliche Drehrichtung der Getriebeabtriebswelle mittels eines zweiten Sensors ermittelt wird, und dass die ermittelten tatsächlichen Drehrichtungen von Getriebeeingangswelle und Getriebeabtriebswelle mit den Soll-Drehrichtungen von Getriebeeingangswelle und Getriebeabtriebswelle verglichen werden und bei einer vordefinierten Abweichung auf einen Fehler geschlossen wird.

In einer anderen Ausgestaltung der ersten erfindungsgemäßen Lösung kann vorgesehen sein, dass unmittelbar beim Anrollen des Fahrzeugs eine tatsächliche Drehrichtung der Getriebeeingangswelle mittels eines ersten Sensors und eine tatsächliche Drehrichtung der Getriebeabtriebswelle mittels eines zweiten Sensors ermittelt wird, die ermittelten tatsächlichen Drehrichtungen von Getriebeeingangswelle und Getriebeabtriebswelle miteinander verglichen werden und der Vergleich der ermittelten tatsächlichen Drehrichtungen von Getriebeeingangswelle und Getriebeabtriebswelle in Abhängigkeit der eingelegten Fahrposition bewertet wird.

Erfindungswesentlich bei der erfindungsgemäßen Lösung ist also die Verwendung der gemessenen Drehrichtungen von Getriebeeingangwelle und Getriebeabtriebswelle zur Detektierung der tatsächlichen Kraftschlussrichtung des Getriebes, anhand derer das Fahrzeug anrollt, egal ob diese tatsächliche Fahrtrichtung des Fahrzeugs derjenigen Fahrrichtung entspricht, die der Fahrer des Fahrzeugs über eine Wähleinrichtung vorgegeben hat. Wenn die so ermittelte tatsächliche Kraftschlussrichtung des Getriebes nicht identisch ist mit der vom Fahrer vorgegebenen Kraftschlussrichtung bzw. Fahrtrichtung, so liegt ein Fehler vor.

Auf einen so erkannten Fehler, der beispielsweise durch das Getriebe oder durch die Fahrpositions-Wähleinrichtung oder durch die Signalübertragung zwischen der Fahrpositions-Wähleinrichtung und dem Getriebe verursacht sein kann, ist getriebeseitig und/oder fahrzeugseitig mit einer geeigneten Diagnosefunktion zu reagieren.

Die sensorspezifische Signalerkennungsschwelle für eine Drehrichtung einer Welle ist geringer als die Signalschwelle, bei oder ab der der gleiche Sensors einen zuverlässigen absoluten Drehzahlwert liefert; eine Aussage zur Drehrichtung kann theoretisch bereits nach zwei Signalpulsen der dem Sensor zugeordneten Zählscheibe getroffen werden. In besonders vorteilhafter Weise ist also bereits ab dem Zeitpunkt des Fahrzeug-Anrollens, bei dem die Signalerkennungsschwelle für ein Drehrichtung des jeweils eingesetzten Sensors erreicht bzw. überschritten ist, eine verlässliche Aussage darüber möglich, ob die von dem Getriebe tatsächlich eingelegte Kraftschlussrichtung identisch ist mit der vom Fahrer über die eingelegten bzw. vorgewählten Fahrposition vorgegeben Fahrt- bzw. Kraftschlussrichtung. Der bis zu diesem Zeitpunkt vom Fahrzeug zurückgelegte Rollweg ist in vorteilhafter Weise vergleichsweise klein.

Würde im Unterschied zur erfindungsgemäßen Lösung, wie beim Stand der Technik zunächst eine eindeutige Bestimmung der tatsächlichen Übersetzung im Getriebe vorgenommen und anschließend ein Vergleich dieser tatsächlichen Getriebeübersetzung mit einer Sollübersetzung durchgeführt, so wäre der vom Fahrzeug bis zur Fehlererkennung zurückgelegte Rollweg insbesondere bei einer vom Betrag her großen Anfahrübersetzung des Fahrzeugs wesentlich länger. Sind zudem die Anfahrübersetzungen in Vorwärts- und Rückwärts-Fahrtrichtung ähnlich, so sind bei der Übersetzungsbestimmung aus den am Getriebeeingang und Getriebeabtrieb tatsächlich gemessenen Drehzahlen entsprechend dem Stand der Technik vergleichsweise große Toleranzbänder zu berücksichtigen, um zuverlässig erkennen zu können, ob das Fahrzeug tatsächlich in die falsche Fahrrichtung anrollt.

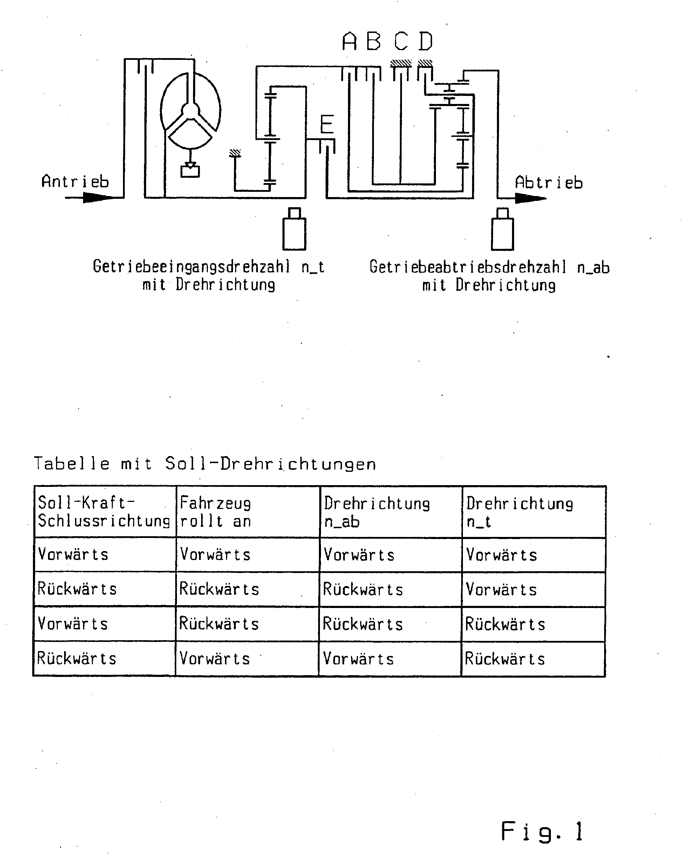

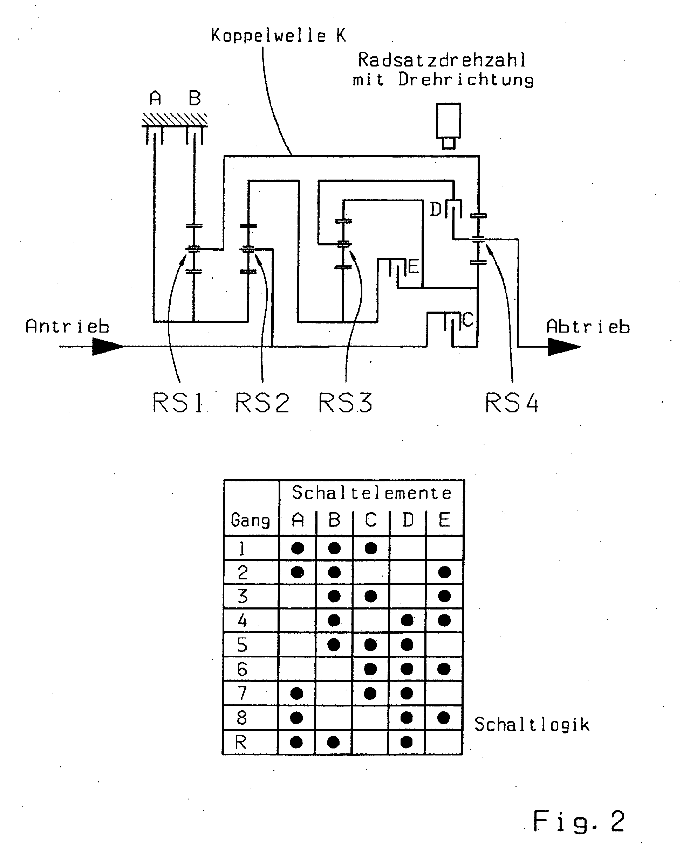

Wenn nicht zwischen Motor und Getriebe ein weiteres Getriebe mit Drehrichtungsumkehr installiert ist, so ist die Drehrichtung der Getriebeeingangswelle beim Anrollen des Fahrzeugs in der Ebene bei eingelegter Fahrposition und Kraftschluss im Getriebe immer identisch der Drehrichtung der Motorkurbelwelle. Demgegenüber ist die Drehrichtung der Getriebeabtriebswelle abhängig von der tatsächlich im Getriebe eingelegten Kraftschussrichtung. Bei den meisten Fahrzeuggetrieben sind die Drehrichtungen von Getriebeeingangswelle und Getriebeabtriebswelle identisch, wenn in dem Getriebe eine Fahrposition mit Vorwärtsfahrtrichtung bzw. ein Vorwärtsgang tatsächlich eingelegt ist, und entgegengesetzt, wenn in dem Getriebe eine Fahrposition mit Rückwärtsfahrtrichtung bzw. ein Rückwärtsgang tatsächlich eingelegt ist. Ein Beispiel zur Plausibilisierung der Kraftschlussrichtung im Getriebe anhand der Drehrichtungen von Getriebeeingangswelle und Getriebeabtriebswelle ist in Figur 1 dargestellt, hier am Beispiel eines bekannten Stufenautomatgetriebes mit sechs Vorwärtsgängen und einem Rückwärtsgang.

Entsprechend kann bei dem erfindungsgemäßen Verfahren vorgesehen sein, dass einerseits auf einen Fehler geschlossen wird, wenn die ermittelten Drehrichtungen von Getriebeeingangswelle und Getriebeabtriebswelle unterschiedlich sind und eine Fahrposition mit Vorwärtsfahrtrichtung eingelegt ist, und dass andererseits auch auf einen Fehler geschlossen wird, wenn die ermittelten Drehrichtungen von Getriebeeingangswelle und Getriebeabtriebswelle gleich sind und eine Fahrposition mit Rückwärtsfahrtrichtung eingelegt ist.

Die erfindungsgemäße Lösung bzw. das erfindungsgemäße Verfahren ermöglicht in besonders vorteilhafter Weise eine sehr schnelle Erkennung, ob die Fahrrichtung des Fahrzeugs, die sich in Folge des in dem Getriebe des Fahrzeugs tatsächlich eingelegten Gangs bzw. in Folge der in dem Getriebe tatsächlich eingestellten Übersetzung ergibt, abweicht von der Fahrtrichtung des Fahrzeugs, die der Fahrer aufgrund seiner eingelegten Fahrposition vorgegeben hat und erwartet. Der Anrollweg des Fahrzeugs bei Vorliegen eines solchen Fehlers bis zu dessen Erkennung kann durch das erfindungsgemäße Verfahren wirkungsvoll minimiert werden. Die frühzeitige Erkennung eines solchen Fehlers ist ein bedeutender Sicherheitsvorteil beim Betrieb des Fahrzeugs.

Wie bereits zuvor erwähnt, liegt dann, wenn die erfindungsgemäß ermittelte tatsächliche Kraftschlussrichtung des Getriebes nicht mit der vom Fahrer vorgegebenen Kraftschlussrichtung bzw. Fahrtrichtung identisch ist, ein schwerer Fehler entweder im Getriebe selber oder bei der Signalübertragung zwischen der Fahrpositions-Wähleinrichtung und dem Getriebe vor, auf den getriebeseitig und/oder fahrzeugseitig zu reagieren ist. Derartige Maßnahmen können beispielsweise sein:
- Ansteuerung einer für den Fahrer optisch wahrnehmbaren Warnanzeige;
- Ansteuerung eines für den Fahrer akustisch wahrnehmbaren Warnsignals;
- Aktivierung einer Ersatzfunktion des Getriebes, bei der automatisch in einen Gang bzw. in eine Übersetzung gewechselt wird, der die vom Fahrer vorgegebenen Fahrtrichtung zur Folge hat, und bei dem die Schaltelementkombination des Getriebes verboten wird, die den detektierten Fehler verursacht hat;
- Aktivierung eines hydraulischen Notprogramms des Getriebes;
- Unterbrechung des Kraftschlusses im Getriebe;
- Eintrag in einem Fehlerspeicher des Getriebes;
- automatische Betätigung eines Bremssystems oder einer Feststellbremse des Fahrzeugs.

Selbstverständlich können einzelne dieser Maßnamen auch miteinander kombiniert werden.

Auch ist die erfindungsgemäße Ermittlung der tatsächlichen Kraftschlussrichtung des Getriebes nicht auf einen bestimmten Getriebetyp beschränkt, sondern universell in automatischen und automatisierten Getrieben mit elektrohydraulischer oder elektropneumatischer Getriebesteuerung beliebiger Bauart anwenden, insbesondere in Stufenautomatgetrieben mit und ohne Drehmomentwandler als Anfahrelement, in Doppelkupplungsgetrieben, in automatisierten Schaltgetrieben, in mechanisch stufenlos schaltbaren Automatgetrieben ohne und mit Leistungsteilung, in hydrostatisch stufenlos schaltbaren Automatgetrieben ohne und mit Leistungsteilung. Dabei können diese automatischen und automatisierten Getrieben Bestandteil sowohl eines konventionellen Antriebstrangs mit Verbrennungsmotor als alleinige Antriebsmaschine des Fahrzeugs sein, als auch Bestandteil eines Hybridantriebstrangs mit Verbrennungsmotor und Elektromotor als Antriebsmaschinen des Fahrzeugs.

## Patentansprüche

1. Verfahren zur Überwachung einer Kraftschlussrichtung eines automatischen oder automatisierten Fahrzeug-Getriebes nahe Fahrzeugstillstand und eingelegter Fahrposition, bei welchem bei Fahrzeugstillstand oder unmittelbar beim Anrollen des Fahrzeugs eine Soll-Kraftschlussrichtung des Getriebes aus der eingelegten Fahrposition ermittelt wird, unmittelbar beim Anrollen des Fahrzeugs eine tatsächliche Kraftschlussrichtung des Getriebes ermittelt wird, und auf einen Fehler geschlossen wird, wenn die Soll-Kraftschlussrichtung und die tatsächliche Kraftschlussrichtung nicht identisch sind, **dadurch gekennzeichnet, dass** die tatsächliche Kraftschlussrichtung des Getriebes aus einer sensierten Drehrichtung einer Getriebeeingangswelle und einer sensierten Drehrichtung einer Getriebeabtriebswelle ermittelt wird.

2. Verfahren nach Anspruch 1, **dadurch gekennzeichnet, dass** aus der eingelegten Fahrposition eine Soll-Drehrichtung der Getriebeeingangswelle und eine Soll-Drehrichtung der Getriebeabtriebswelle bestimmt wird, dass unmittelbar beim Anrollen des Fahrzeugs eine tatsächliche Drehrichtung der Getriebeeingangswelle mittels eines ersten Sensors und eine tatsächliche Drehrichtung der Getriebeabtriebswelle mittels eines zweiten Sensors ermittelt wird, die tatsächlichen Drehrichtungen von Getriebeeingangswelle und Getriebeabtriebswelle mit den Soll-Drehrichtungen von Getriebeeingangswelle und Getriebeabtriebswelle verglichen werden und bei einer vordefinierten Abweichung auf einen Fehler geschlossen wird.

3. Verfahren nach Anspruch 1, **dadurch gekennzeichnet, dass** unmittelbar beim Anrollen des Fahrzeugs eine tatsächliche Drehrichtung der Getriebeeingangswelle mittels eines ersten Sensors und eine tatsächliche Drehrichtung der Getriebeabtriebswelle mittels eines zweiten Sensors ermittelt wird, die tatsächlichen Drehrichtungen von Getriebeeingangswelle und Getriebeabtriebswelle miteinander verglichen werden und der Vergleich der tatsächlichen Drehrichtungen von Getriebeeingangswelle und Getriebeabtriebswelle in Abhängigkeit der eingelegten Fahrposition bewertet wird.

4. Verfahren nach Anspruch 1, 2 oder 3, **dadurch gekennzeichnet, dass** auf einen Fehler geschlossen wird, wenn die tatsächlichen Drehrichtungen von Getriebeeingangswelle und Getriebeabtriebswelle unterschiedlich sind und eine Fahrposition mit Vorwärtsfahrtrichtung eingelegt ist, und dass auf einen Fehler geschlossen wird, wenn die tatsächlichen Drehrichtungen von Getriebeeingangswelle und Getriebeabtriebswelle gleich sind und eine Fahrposition mit Rückwärtsfahrtrichtung eingelegt ist.

5. Verfahren nach einem der vorherigen Ansprüche, **dadurch gekennzeichnet, dass** dann, wenn die ermittelte tatsächliche Kraftschlussrichtung des Getriebes nicht mit der vom Fahrer des Fahrzeugs vorgegebenen Kraftschlussrichtung bzw. Fahrtrichtung identisch ist, als FehlerReaktion eine oder mehrerer der folgenden Funktionen durchgeführt werden:
- Ansteuerung einer für den Fahrer optisch wahrnehmbaren Warnanzeige;
- Ansteuerung eines für den Fahrer akustisch wahrnehmbaren Warnsignals;
- Aktivierung einer Ersatzfunktion des Getriebes, bei der automatisch in einen Gang bzw. in eine Übersetzung gewechselt wird, der die vom Fahrer vorgegebenen Fahrtrichtung zur Folge hat, und bei dem die Schaltelementkombination des Getriebes verboten wird, die den detektierten Fehler verursacht hat;
- Aktivierung eines hydraulischen Notprogramms des Getriebes;
- Unterbrechung des Kraftschlusses im Getriebe;
- Eintrag in einem Fehlerspeicher des Getriebes;
- automatische Betätigung eines Bremssystems oder einer Feststellbremse des Fahrzeugs.

## Claims

1. Method for monitoring the direction of frictional connection of an automatic or automated vehicle transmission near to a stationary state of the vehicle and with the drive position engaged, in which a set point direction of the frictional connection of the transmission is determined from the engaged drive position in a stationary state of the vehicle or immediately when the vehicle starts to roll, and an actual direction of the frictional connection of the transmission is determined immediately when the vehicle starts to roll, and it is concluded that a fault is present if the set point direction of the frictional connection and the actual direction of the frictional connection are not identical, **characterized in that** the actual direction of frictional connection of the transmission is determined from a sensed rotational direction of a transmission input shaft and a sensed rotational direction of a transmission output shaft.

2. Method according to Claim 1, **characterized in that** a set point rotational direction of the transmission input shaft and a set point rotational direction of the transmission output shaft are determined from the engaged drive position, **in that** immediately when the vehicle starts to roll, an actual rotational direction of the transmission input shaft is determined by means of a first sensor and an actual rotational direction of the transmission output shaft is determined by means of a second sensor, the actual rotational directions of the transmission input shaft and transmission output shaft are compared with the set point rotational directions of the transmission input shaft and transmission output shaft, and if there is a predefined deviation it is concluded that a fault is present.

3. Method according to Claim 1, **characterized in that**, immediately when the vehicle starts to roll, an actual rotational direction of the transmission input shaft is determined by means of a first sensor and an actual rotational direction of the transmission output shaft is determined by means of a second sensor, the actual rotational directions of the transmission input shaft and transmission output shaft are compared with one another, and the comparison of the actual rotational directions of the transmission input shaft and transmission output shaft are evaluated as a function of the engaged drive position.

4. Method according to Claim 1, 2 or 3, **characterized in that** it is concluded that a fault is present if the actual rotational directions of the transmission input shaft and transmission output shaft are different and a drive position with forward travel direction is engaged, and **in that** it is concluded that a fault is present if the actual rotational directions of the transmission input shaft and transmission output shaft are the same and a drive position with reverse travel direction is engaged.

5. Method according to one of the preceding claims, **characterized in that** if the determined actual direction of frictional connection of the transmission is not identical to the direction of frictional connection or travel direction predefined by the driver of the vehicle, one or more of the following functions are carried out as a fault reaction:
- actuation of a warning display which can be perceived visually by the driver;
- actuation of a warning signal which can be perceived acoustically by the driver;
- activation of a backup function of the transmission in which the transmission is changed automatically into a gear speed or a transmission ratio which results in the travel direction predefined by the driver and in which the shifting element combination of the transmission which caused the detected fault is prohibited;
- activation of a hydraulic emergency program of the transmission;
- interruption of the frictional connection in the transmission;
- making of an entry in a fault memory of the transmission; and
- automatic activation of a brake system or of a parking brake of the vehicle.

## Revendications

1. Procédé de surveillance d'un sens de liaison de friction d'une boîte de vitesses automatique ou automatisée d'un véhicule à proximité de l'arrêt du véhicule et dans une position de conduite enclenchée, dans lequel, à l'arrêt du véhicule ou juste au début du roulement du véhicule, un sens de liaison de friction de consigne de la boîte de vitesses à partir de la position de conduite enclenchée est déterminé, juste au début du roulement du véhicule, un sens de liaison de friction effectif de la boîte de vitesses est déterminé, et on en déduit une erreur, lorsque le sens de liaison de friction de consigne et le sens de liaison de friction effectif ne sont pas identiques, **caractérisé en ce que** le sens de liaison de friction effectif de la boîte de vitesses est déterminé à partir d'un sens de rotation détecté d'un arbre d'entrée de boîte de vitesses et d'un sens de rotation détecté d'un arbre de sortie de boîte de vitesses.

2. Procédé selon la revendication 1, **caractérisé en ce que** l'on détermine à partir de la position de conduite enclenchée, un sens de rotation de consigne de l'arbre d'entrée de boîte de vitesses et un sens de rotation de consigne de l'arbre de sortie de boîte de vitesses, **en ce que** juste au début du roulement du véhicule, on détermine un sens de rotation effectif de l'arbre d'entrée de boîte de vitesses au moyen d'un premier capteur et un sens de rotation effectif de l'arbre de sortie de boîte de vitesses au moyen d'un deuxième capteur, les sens de rotation effectifs de l'arbre d'entrée de boîte de vitesses et de l'arbre de sortie de boîte de vitesses étant comparés aux sens de rotation de consigne de l'arbre d'entrée de boîte de vitesses et de l'arbre de sortie de boîte de vitesses et en cas d'écart prédéfini, on en déduit une erreur.

3. Procédé selon la revendication 1, **caractérisé en ce que** juste au début du roulement du véhicule, on détermine un sens de rotation effectif de l'arbre d'entrée de boîte de vitesses au moyen d'un premier capteur et un sens de rotation effectif de l'arbre de sortie de boîte de vitesses au moyen d'un deuxième capteur, les sens de rotation effectifs de l'arbre d'entrée de boîte de vitesses et de l'arbre de sortie de boîte de vitesses sont comparés l'un à l'autre et la comparaison des sens de rotation effectifs de l'arbre d'entrée de boîte de vitesses et de l'arbre de sortie de boîte de vitesses est analysée en fonction de la position de conduite enclenchée.

4. Procédé selon la revendication 1, 2 ou 3,
**caractérisé en ce que** l'on déduit une erreur lorsque les sens de rotation effectifs de l'arbre d'entrée de boîte de vitesses et de l'arbre de sortie de boîte de vitesses sont différents et qu'une position de conduite avec sens d'avance de marche avant est enclenchée, et **en ce que** l'on déduit une erreur lorsque les sens de rotation effectifs de l'arbre d'entrée de boîte de vitesses et de l'arbre de sortie de boîte de vitesses sont identiques et qu'une position de conduite avec un sens d'avance de marche arrière est enclenchée.

5. Procédé selon l'une quelconque des revendications précédentes, **caractérisé en ce que** si le sens de liaison de friction effectif détecté de la boîte de vitesses n'est pas identique au sens de liaison de friction ou au sens de conduite prédéfini par le conducteur du véhicule, on effectue en tant que réaction d'erreur, une ou plusieurs des fonctions suivantes :
- commande d'une indication d'alarme perceptible optiquement par le conducteur ;
- commande d'un signal d'alarme perceptible acoustiquement par le conducteur ;
- activation d'une fonction de remplacement de la boîte de vitesses, dans laquelle on passe automatiquement dans une vitesse ou un rapport qui entraîne le sens de conduite prédéfini par le conducteur, et dans laquelle la combinaison d'éléments de changement de vitesse de la boîte de vitesses qui a causé l'erreur détectée est interdite ;
- activation d'un programme de secours hydraulique de la boîte de vitesses ;
- interruption du flux de forces dans la boîte de vitesses ;
- entrée dans une mémoire d'erreur de la boîte de vitesses ;
- activation automatique d'un système de freinage ou d'un frein de stationnement du véhicule.
